(19) Europäisches Patentamt
European Patent Office
Office européen des brevets

(11) **EP 2 814 184 B1**

(12) **EUROPEAN PATENT SPECIFICATION**

(45) Date of publication and mention
of the grant of the patent:
**08.08.2018   Bulletin 2018/32**

(51) Int Cl.:
***H04B 1/525*** *(2015.01)*

(21) Application number: **13360012.2**

(22) Date of filing: **14.06.2013**

(54) **Two stage leakage cancellation in full duplex communication**

Zweistufige Leckstromunterdrückung in Vollduplex-Übertragung

Annulation en deux étages de courants de fuite en communication duplex intégral

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.12.2014   Bulletin 2014/51**

(73) Proprietor: **Alcatel Lucent
91620 Nozay (FR)**

(72) Inventors:
 • **Claussen, Holger
   15 Dublin (IE)**
 • **Pivit, Florian
   15 Dublin (IE)**
 • **Venkateswaran, Vijay
   Dublin 15 (IE)**

(74) Representative: **Berthier, Karine
Alcatel-Lucent International
Patent Business
Site Nokia Paris Saclay
Route de Villejust
91620 Nozay (FR)**

(56) References cited:
**EP-A2- 1 841 084     US-A1- 2013 114 468**

 • **Wei-Han Cheng: "Thesis: Cancellation circuit for
   transmit-receive isolation", Naval Postgraduate
   School , September 2010 (2010-09),
   XP002718881, Retrieved from the Internet:
   URL:http://www.nps.edu/ [retrieved on
   2014-01-17]**

**Description**

FIELD OF THE INVENTION

The present invention relates to a receiver and a method of signal cancellation and more particularly, but not exclusively to a receiver for use in wireless communications in which transmission and reception occur in the same bandwidth, and to a method of leakage signal cancellation in wireless communications in which transmission and reception occur in the same bandwidth.

BACKGROUND OF THE INVENTION

Increasing demand for wireless multimedia services is driving strong growth in wireless data traffic. This is causing increasing demand for the useful part of the wireless spectrum, which is becoming ever more limited and expensive. As a result cellular operators have a high interest in utilizing the available spectrum as efficiently as possible.

Some different approaches that aim to increase the efficiency of spectrum use are for example small cells, multiple-input and multiple-output (MIMO) antennas, and better coding and modulation techniques.

Another proposed way of increasing spectral efficiency is to receive and transmit signals in the same frequency bands of operation. This is sometimes called full duplex communications and differs fundamentally from standard communications in which different frequency bands are used for transmission and reception. The main challenge in designing a transceiver that enables full duplex communication, is the need to cancel leakage reflections of transmit signals at the receiver. Interference cancellation algorithms can be used in digital domain, however as both the receiver and transmitter are using the same frequency band, very high values of transmit leakage/reflections (self-interference) may saturate the receiver chain. Therefore, currently impractical ADC resolution will be required in order to perform the interference cancellation using algorithms in the digital domain.

It is therefore desirable to provide a way of increasing spectral efficiency. It is further desirable to provide an improved receiver and method of leakage signal cancellation for full duplex wireless communications in which transmission and reception occur in the same bandwidth.

EP1841084 discloses a radio communication apparatus, including a power suppressor, and a transceiver having a coupling loop interference removal function. The transceiver includes an analog signal processor and a digital signal processor. The analog signal processor includes an analog domain interference canceller, a received RF signal processor, and an A/D converter. A digital signal processor includes a digital domain interference canceller. The power suppressor may be in different positions.

SUMMARY OF THE INVENTION

According to a first aspect of the invention, there is provided a receiver for wireless communications as provided in claim 1.

The receiver may further comprise a second analog-to-digital converter operable to convert the modulated output signal from the modulated wideband leakage canceller to a second digital signal and provide the second digital signal for use in the modulated wideband leakage cancellation algorithm.

The modulated wideband leakage canceller may comprise a plurality of tunable mixers. The wideband leakage cancellation algorithm may comprise estimating modulated wideband waveforms to approximate a phase shift for each of the plurality of tunable mixers.

The modulated wideband leakage canceller may comprise a summation unit operable to combine the outputs of the plurality of tunable mixers to provide the modulated output signal.

The digital leakage canceller may be operable to estimate a channel matrix between the transmission path and reception path in the receiver, the channel matrix representing the residual leakage in the digital signal.

The digital leakage canceller may be operable to estimate the channel matrix based on an impulse response of the channel using a training interval and a pilot sequence. The channel matrix may represent the channel from the transmit path to the digital leakage canceller.

The digital leakage canceller may be operable to re-construct the residual leakage signal based on the estimated channel matrix, and provide the desired signal by subtracting a re-constructed residual leakage signal from the digital signal.

The RF signal may further comprise an interference component from nearby radios and/or a noise component and the second leakage canceller may be operable to provide the desired signal by subtracting the interference component and/or noise component from the digital signal.

The RF signal may further comprise a jamming signal component and the first leakage canceller may be operable to suppress the jamming signal component.

The receiver according may further comprise an antenna operable to transmit and receive RF signals, and a circulator operable to provide RF signals for transmission to the antenna on a transmission path, and operable to provide RF signals received by the antenna to the first leakage canceller on a reception path.

According to a second aspect of the invention, there is provided a method of leakage signal cancellation in wireless communications as provided in claim 10.

According to a third aspect of the invention, there is provided a computer program product operable when executed on a computer to perform the method of the above second aspect.

Further particular and preferred aspects of the invention are set out in the accompanying independent and dependent claims.

BRIEF DESCRIPTION OF THE DRAWINGS

Some embodiments of the apparatus and/or methods in accordance with embodiment of the present invention are now described, by way of example only, with reference to the accompanying drawings, in which:

Figure 1 schematically shows the causes of transmitter leakage into the receive path of a receiver;

Figure 2 schematically shows a receiver of an embodiment;

Figure 3 schematically shows the modulated wideband leakage canceller of Figure 2;

Figure 4 shows the simulated SINR leakage suppression of the modulated wideband leakage canceller of Figure 3 as function of ADC resolution; and

Figure 5 shows the power levels, leakage suppression and dynamic range of the receiver of Figures 2 and 3.

DESCRIPTION OF EMBODIMENTS

In existing wireless communication schemes in which transmission and reception occur in different bandwidths, such as in frequency division duplex (FDD) and in time division duplex (TDD), the transmit and receive signals can be easily separated in the transceiver either using filters or switches. In a FDD systems, the required isolation or suppression of transmitter signal leakage into the receiver is achieved by a duplex-filter and further filtering in the radio, for example by IF-filters, digital filters or the like. In TDD systems the required isolation or suppression of transmitter signal leakage into the receiver is achieved by receiving or transmitting at different time slots.

However, in full duplex wireless communications, transmission and reception occur simultaneously re-using the same bandwidth and the approaches used for FDD and TDD systems cannot be used when transmitting and receiving at the same time at the same frequency. In full duplex wireless communications, the transmit signal may be in the order of 120 dB stronger than the received signals. Also, during transmission, a significant fraction of the transmitted energy may be leaked into the receiver by direct leakage, PCB surface waves, reflections at the antenna, or reflections from the immediate environment. Further, at the receiver, the dynamic range of the signal, that is the received signal plus the leakage from transmitter signal may exceed the capabilities of current analog to digital converters. In full duplex wireless communication, separation of the transmit and receive signals is therefore a major consideration

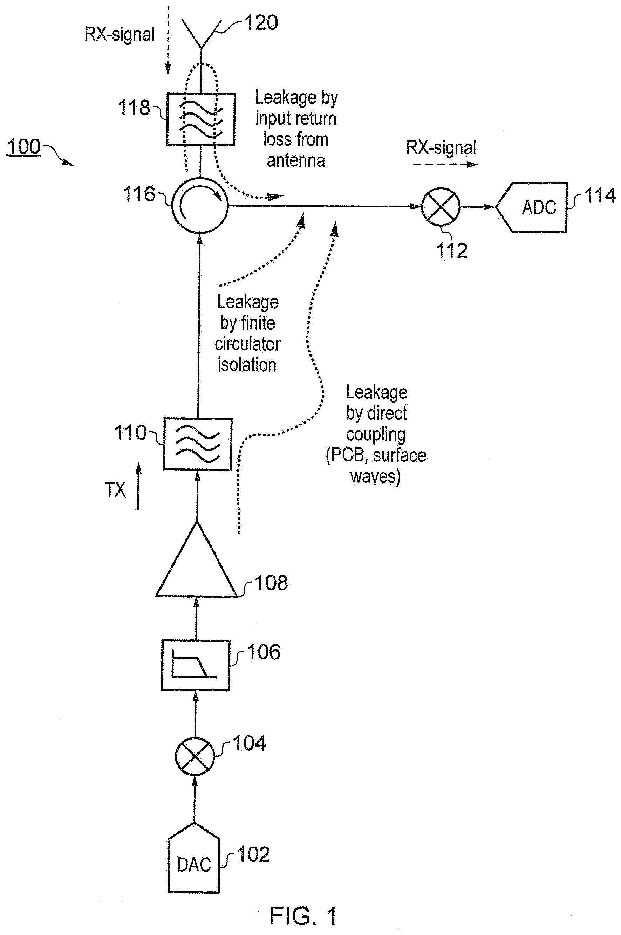

Figure 1 schematically shows a receiver 100 and the causes of transmitter leakage into the receive path of the receiver 100. The receiver 100 comprises a transmission path and a receive path. The transmission path comprises a digital-to-analogue converter (DAC) 102 coupled to a mixer/multiplier 104, a low pass filter 106, an amplifier 108 and a filter 110. The receive path comprises a multiplier 112 coupled to an ADC 114. The transmission and receive path are coupled together by a circulator 116.

Signals for transmission pass from the DAC 102 along the transmission path, through the circulator 116, through the filter 118 and are transmitted by antenna 120. Desired signals are received by antenna 120, pass through the filter 118, through the circulator 116 and along the receive path.

As can be seen in Figure 1, leakage between the transmitter path and the receiver path in the transceiver has several sources. Firstly, there is leakage into the receive path caused by coupling within the transceiver itself, caused by coupling through the printed circuit board (PCB), which may be in the form of PCB surface waves. Secondly, there is leakage into the receive path caused by the finite isolation of the circulator 116. Thirdly, there is leakage into the receive path caused by coupling from the antenna 120, either due to the input return loss of the antenna or through reflections of the transmitted signal from objects in front of the antenna which reflect part of the transmitted signal back to the antenna 120 back into the receiver path.

In order to enable decoding of the received signal, it is necessary to achieve isolation between the desired received signal and the unwanted leakage of the transmit signal into the receiver.

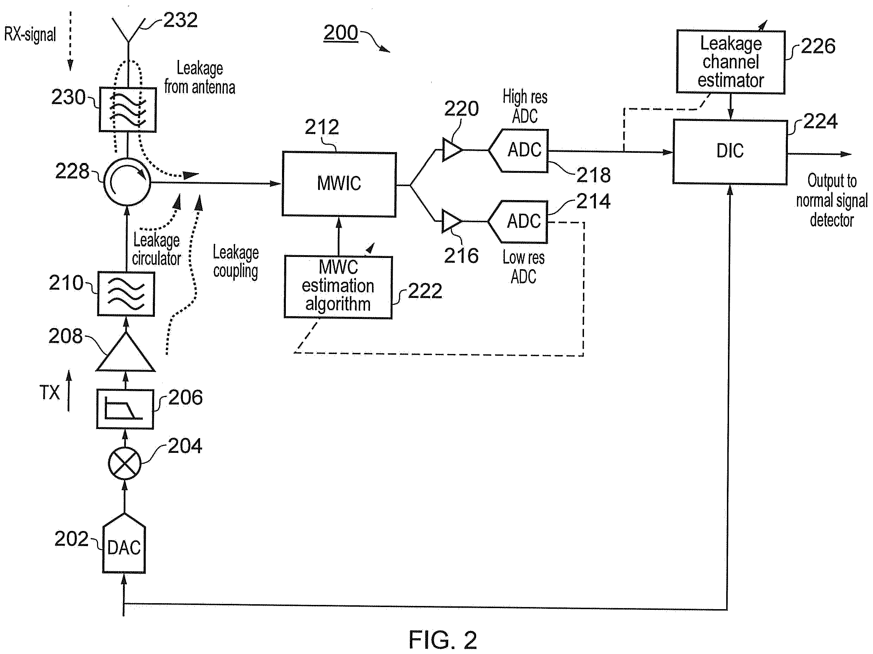

Figure 2 schematically shows a receiver 200 according to an embodiment. The receiver 200, like the receiver 100 of Figure 1 comprises a transmission path comprising a DAC 202, which receives digital signal from transmission that is coupled to a multiplier 204, an amplifier 208 and filters 206 & 210. The receive path of the receiver 200 of Figure 2 differs from that of receiver 100 of Figure 1, in that a two-stage leakage cancellation is performed in the receive path to cancel the unwanted leakage of the transmit signals.

The receive path comprises a modulated wideband leakage canceller (MWIC) 212 coupled to a first ADC 214 via a first low noise amplifier 216 and a second ADC 218 via a second low noise amplifier 220. In the embodiment shown in Figure 2, the first ADC 214 is a lower resolution ADC the second ADC 218.

The digitized output of the lower resolution ADC 214 is fed back to the MWIC 212 via a modulated wideband converter estimation algorithm unit 222. The output of the higher resolution ADC 218 is passed to a digital leakage canceller (DIC) 224 and a leakage channel estimation unit 226. The DIC 224 receives signals from the leakage channel estimation unit 226 and is notified of the digital signal for transmission so that it has knowledge of the transmitted signal.

The transmission and receive path are coupled together by a circulator 228. Signals for transmission pass from the DAC 202 along the transmission path, through the circulator 228, through the filter 230 and are transmitted by antenna 232. Signals are received by antenna 232, pass through the filter 230, through the circulator 228 and along the receive path, where leakage signals are cancelled from the received signals as will now be described.

In receiver 200, after a first separation of transmit and receive signal by circulator 228 a first stage of coarse leakage suppression is performed in the analog RF domain on the received signals in order to substantially reduce the leakage component signals. Then, the received signals are digitized and a second leakage cancellation stage in the digital domain removes the residual leakage signal. By first performing coarse leakage suppression in the RF domain, saturation of the low noise amplifier 220 can be prevented, and lower resolution ADC can be used than if the entire leakage suppression were to be performed in the digital domain.

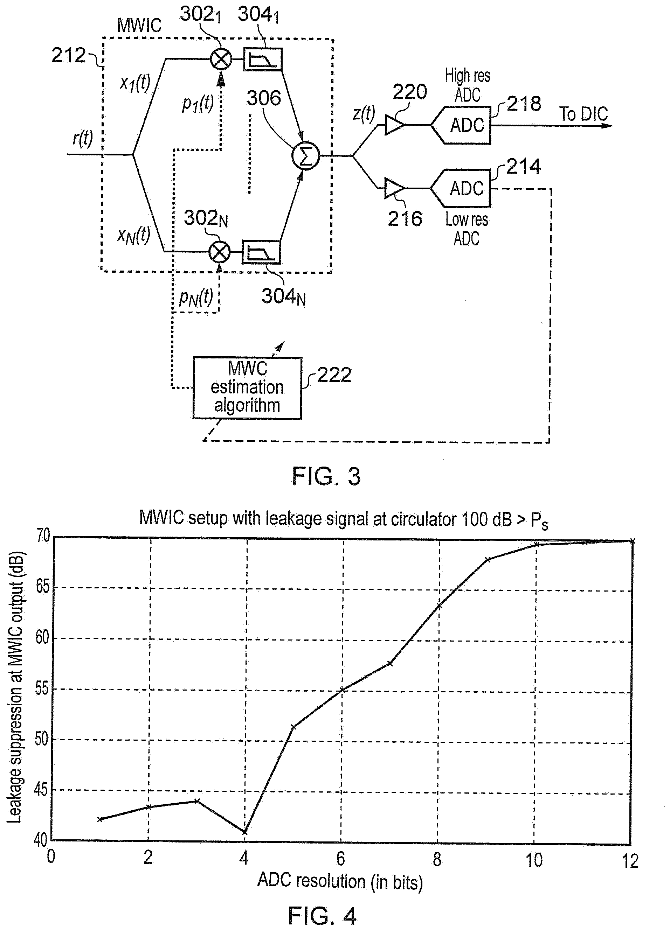

The leakage suppression in the analog RF domain is achieved using the MWIC 212, which comprises a bank of tunable mixers, also referred to as a bank of modulated wideband converters (MWC), as will be described in relation to Figure 3. The digital interference cancellation is achieved by the DIC 224 using channel estimation, re-creation of the leakage signal based on known transmitted signal, followed by subtraction of the leakage signal.

It is possible to estimate the MWC coefficients for coarse leakage cancellation, and the residual leakage signal for digital cancellation, as the transmitted signal is known and the received signal is digitized at lower resolution not covering the full dynamic range. This required dynamic range is usually determined by the dynamic range of the analog-to-digital-converter (ADC) and to a lesser extent by the dynamic range of the LNA. The amount of signal energy that finds its way from the transmitter path into the receiver path should be low enough such that the receiver is not saturated and enough dynamic range is available to correctly sample the signal corresponding to the desired user.

The analog leakage signal suppression in the RF domain will now be described in more detail with reference to Figure 3, which schematically shows the MWIC 212 of Figure 2. Elements that are the same as in Figure 2 share the same reference numbers.

In order to suppress the leakage signal, which is a combination of all leakage effects like return loss from the antenna, leakage through the circulator, surface waves in the printed circuit board as shown in Figure 1, a MWIC 212 comprising a bank of tunable mixers is used in a first leakage cancellation stage. Such an arrangement is used in the context of the receiver operating at frequencies below the Nyquist rates.

MWIC 212 comprises a bank of tunable mixers or modulated wideband converters (MWC). Each MWC comprises an input signal path $x_1(t)$ to $x_N(t)$, a multiplier $302_1$ to $302_N$, a filter $304_1$ to $304_N$ and an output signal path. The output signal paths of the MWCs are coupled to a summation unit 306, which is operable to sum the outputs of the MWCs. The MWC estimation algorithm unit 222 is operable to estimate MWC coefficients and transmit these to the multipliers $302_1$ to $302_N$ of the MWCs, as will be described below. The MWC coefficients may be estimated in order to minimize the means squared error (MMSE) between the transmitted signal and its leakage estimate by using a MMSE algorithm. As shown in Figure 3, the receive path signals $r(t)$ are modulated and combined using the MWCs. These modulating waveforms are designed to suppress the leakage signal. It is important to note that the receiver has knowledge of the leakage signal properties.

The multipliers $302_1$ to $302_N$ may be wideband synthesizers, such as the ADF4350 synthesizer supplied by Analog Devices (RTM) or any other suitable devices.

By using the MWCs, phase tapering of the different MWC branches can be achieved followed by their combining, which may be considered to be similar to a beamforming operation, which can suppress the leakage signal. This phase tapering is achieved using the MWC waveforms ($p_i(t), 1 \leq i \leq N$) provided by the MWC estimation algorithm unit 222, followed by a bandpass filtering and combining. More specifically, the MWC waveform is estimated such that the first harmonic of $p_i(t)$ achieves the desired phase tapering. Subsequently, combining all the phase tapered branches in the MWC leads to the suppression of the leakage signal. Details of the MWC estimation algorithms that adaptively estimates $p_i$ is explained below.

The objective of this first leakage suppression scheme is to make sure that the signal levels at the MWC outputs do not saturate the subsequent LNA and the ADCs. The MWC outputs are subsequently down-converted and digitized to perform the next stage of digital interference cancellation in the DIC 224. As can be seen in Figure 4, simulation results show that for a narrowband full duplex communications, leakage suppression of around 60 dB can be achieved using an 8 tap MWIC 212 and an ADC resolution of 10 bits. From Figure 4, it is important to note that the MWIC is a coarse interference canceller and that the MWIC output contains residual leakage $\sim$>30dB than the desired signal at the receiver. This residual $\sim$>30dB leakage is suppressed by the DIC 224.

The MWC waveforms $p_i(t)$ may be chosen from a dictionary of existing waveforms, with specific phase and frequency offsets. The estimation of the corresponding waveforms is done in the digital domain and may be adaptively updated or initialized at the start of communications. As will be appreciated, the complexity of estimation techniques is negligible when compared to that of the overall system.

Referring back to Figure 3, let the signal at the beginning of receive chain be $r(t)$, and this signal is divided into $N$ signals, using the MWC setup as $x(t) = [x_1(t),.....x_N(t)]$. This signal contains the leakage interferer i($t$) as well as the signals s($t$) from the receive antenna containing desired signal, other radio interferers and noise. In other words, $\mathbf{x}(t) = \mathbf{s}(t) + \mathbf{i}(t)$.

One approach to suppress the leakage is to design an interference canceller $\theta = [\theta_1,....\theta_N]$ such that it allows all the signals except those signals corresponding to transmit leakage. Since we know the properties of the leakage signal, a phase shifter can be designed to satisfy the following function:

$$\theta = \frac{\arg\max}{\theta}\, \theta^T R_x \theta$$

such that $E\|\theta^T i(t)\|^2 = 0$ where $R_x$ corresponds to autocorrelation of x($t$).

The above cost function is a modification of the generalized sidelobe canceller (GSC). GSC approaches are usually used in the digital domain to cancel signals from a strong interferer. However, the modified GSC in this embodiment is redesigned for a MWC analog situation in order to suppress the interferer before the signal reaches the LNA.

For this reason, the modulated wideband waveforms (MWW) $p_i(t)$ are estimated to approximate a phase shift operation $\theta_i$ for $1 \leq i \leq N$ at the frequency of receiver signals x($t$). This can be implemented by choosing $p_i(t)$ such that the first harmonic of the Fourier transform of $p_i(t)$ will approximate to $\theta_i$.

Hence the problem of suppressing the interferer is transformed to a problem of choosing a MWW such that:

$$p_i(t) = \frac{\min}{p_i(t)} \left\| F_1\{p_i(t)\} - \theta_i \right\|^2$$

Where $F_1\{.\}$ corresponds to the first harmonic of any sequence and obtained using discrete Fourier transform operation. The tunable mixer outputs are low pass filtered and combined to obtain the leakage suppressed signal z($t$) as shown in Figure 3:

$$z(t) = \sum_{i=1}^{N} LPF\{p_i(t)x_i(t)\} = s_0(t) + s_i(t)$$

Note that this signal is digitized and contains the desired user signal ($s_0(t)$) and some residual components of the interferer and noise ($s_i(t)$), the final stage of digital interference cancellation and equalization will cancel the residual leakage component.

For the calculation of the MWC coefficients, it is necessary for signal to be digitized. However, as this digitization is needed before the interference has been completely suppressed or cancelled, a normal resolution ADC cannot be used, because to use a normal resolution ADC for conversion before the MWC is optimized, will cause LNA saturation. In the embodiment of Figures 2 and 3, this issue is resolved by using the lower resolution ADC 214 to provide digital signals for the MWC parameter optimization. In other words, the ADC feeding the MWC estimation algorithm unit 222 may not cover the full dynamic range, but only the part of the range the analog suppression is trying to address. Also in Figures 2 and 3, a lower sensitivity LNA 216 may also be used when compared to the LNA 220. The LNA 216 may be less sensitive in order to be able to pass the signal through the MWC parameter estimation 222 when the MWC is not yet configured to operate or is not optimized. By using a lower sensitivity LNA 216 and a lower resolution ADC 214, this allows the MWC parameters to be optimized while LNA saturation is avoided.

Another way of preventing LNA saturation, would be to de-sensitize the LNA input until the MWC filter components are optimized, and then switch to normal operation. It should be noted that this approach may be used in addition to using the lower resolution ADC 214 of Figure 2 and 3 to supply digital signals for the MWC parameter optimization. It should also be noted that this approach may be used with only a single LNA and ADC combination that is used to provide both digital signals for the MWC parameter optimization and digital signals for the DIC 224.

By performing the coarse analog leakage suppression before the analog-to-digital conversion by ADC 218, the dynamic range of the signal at ADC 218 can be brought within the dynamic range of currently available ADCs and LNAs.

Another advantage of performing a first leakage cancellation stage in the analog domain is reduced energy consumption, since the signal that needs to be subtracted does not need to be re-created.

After the analog-to-digital conversion, a second leakage cancellation is applied in the digital domain to remove the residual leakage component. The signal from the ADC 218 is provided to the input of the DIC 224. This signal may be written as:

$$z = sH + a + I + n$$

where

$s$ is the transmitted signal.
$H$ represents the channel matrix between transmission and reception path representing all remaining leakage, reflections, etc. Please note that $H$ depends on the analog leakage suppression, so if the MWC parameters are changed, $H$ needs to be re-estimated.
$a$ is the wanted uplink signal.
$I$ is the interference from other mobiles and base stations.
$n$ is the noise.

The channel matrix $H$ may be generated based on the impulse response of the channel, which can be obtained using a training interval and a pilot sequence using known techniques. Since both s and H are known, the residual leakage $sH$ can be calculated and subtracted from the signal.

Assuming a high quality estimate of $H$, this leaves us with

$$y = z - sH$$

$$y = a + I + n$$

After the leakage cancellation we are left with the wanted received signal component $a$, interference (from other users and base stations) component $I$, and noise $n$.

This is very similar compared to the received signal in current wireless communication, with the difference that the interference $I$ consists of additional parts originating from the additional transmissions from other devices. The received signal can now be processed using known methods to recover the desired received signal.

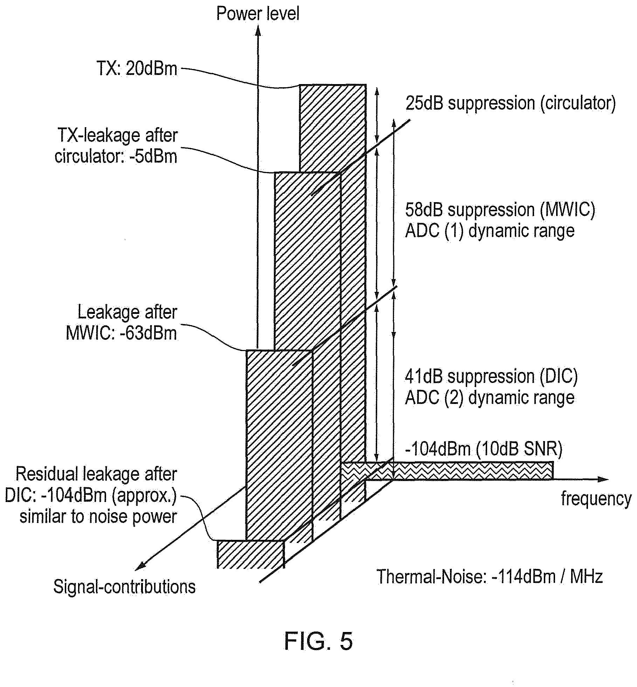

Figure 5 shows an illustrative example of the power levels of leakage suppression for the receivers of Figure 2 and 3. Consider a signal comprising a desired component and a large leakage signal component is received by the receiver. On passing though the circulator 228, the leakage component is suppressed by 25dB. On passing through the MWIC 212, the leakage component is further suppressed by 58dB. On passing through the DIC 224, the leakage component is suppressed by 41dB, leaving the desired signal component for downstream processing.

Also, as can be seen from Figure 5, the dynamic range of the ADC 214 (ADC(1)) does not cover the entire dynamic range of the interference signals. The dynamic range of the ADC 214 cover only the portion of the interference signals that are to be suppressed in the MWIC 212. This enables the dynamic range of the ADC 218 (ADC(2)) to be sufficient to cover the remainder of the interference signal for suppression in the DIC 224.

As can be seen from the above, by using a first leakage signal cancellation step in the analogue domain and then a second analogue cancellation step in the digital domain, the leakage signal from the transmitter can be suppressed in the receiver, thereby allowing efficient full duplex wireless communications in which transmission and reception occur in the same bandwidth.

Another consideration is what happens to the dynamic range and resolution of ADCs in the presence of a strong interferer. For example, consider a scenario where there is a strong interferer due to the transmitter with power $P_i$, in

addition to the desired signal $P_s(P_s << P_i)$ at the ADC input.

Assuming a sinusoidal input signal with Gaussian distrubution and allocating sufficient dynamic range to such that less than 5 % of the signal plus interferer signals are clipped, $A_{amp} = 4\sqrt{P_i + P_s}$ , where $A_{amp}$ is the peak amplitude of a Gaussian distributed signal input at the ADC.

Applying the Lloyd-Max quantization expression for a bandlimited system with width $B$ and sampling at a frequency $F_s$, the quantization noise energy $P_Q$ is:

$$P_Q = \frac{8.}{3} 2^{-2b}(P_i + P_s)\frac{B}{F_s}$$

In typical receivers, the ADCs are typically designed to provide a signal to quantization noise ratio of $SNR_r$=10 dB i.e. $P_Q = P_s 10^{-SNR_r/10}$. Introducing this relation in the above expression and approximating $P_i \approx P_i + P_s$ we get:

$$b = \frac{1}{2}\log_2\left[\frac{8}{3}\frac{P_i + P_s}{P_Q}\frac{B}{F_s}\right].$$

In addition, the spurious free dynamic response (SFDR) with sinusoidal signals must be taken into account, as well as non-linear effects due to aperture jitter and capacitance noise, with an additional allocation of 1.5 bits needed to achieve the required SNR.

The following two examples illustrate the dynamic range and ADC resolution required to achive desired performance in a small cell network scenario and a macro cell scenario.

Example 1: Small cell network

| | |
|---|---|
| Transmit power: | +20 dBm |
| Direct leakage (after circulator) | -5 dBm |
| Reflections (worst case) | -24dBm (free-space pathloss for 2 meter: -44dB) |

• Input signals reflected at the receive antennas.

<center>Resultant transmit signal    -4.5 dBm.</center>

• The resultant signal consists of transmit signals from direct and reflected paths.

Transmit leakage cancellation provides -65 dB suppression of the self-interfering signal. This consists of

• Power level of the self-interferer at the ADC ($P_i$) : -69.5 dBm
• Noise floor: ∽-114dBm->

   ⇒ Signal reconstruction requirement: desired user signal should be 10-20 dB above noise floor

   ⇒ i.e. $P_s$ ∽-100 dBm and minimum signal to interference ratio $\dfrac{P_i}{P_s} > 30$ dB

   ⇒ Required signal plus interferer to ADC quantization noise ratio: $\dfrac{P_i + P_s}{P_Q} > 41$ dB

Thus the effective resolution assuming linear ADC operation is 8 bits and accounting for non-linearities (+2 bits) leads us to ADC requirements of 10 bits to achieve desired signal to noise ratio (SNR) receiver performance.

Example 2: Macro-cell scenario

| | |
|---|---|
| Transmit power 10W (= 40 dBm). | |
| Transmit power: | 40 dBm |
| Direct leakage (finite circulator isolation) | +15 dBm |
| Reflections (worst case) | -4dBm (free-space pathloss for 2 meter: 44dB) |
| Resultant transmit signal | ~+15 dBm. |

Transmit leakage cancellation provides -65 dB suppression

- Power level of the self-interferer at the ADC ($P_i$): -50 dBm
- Noise floor ~-110dBm ->

$\Rightarrow$ Signal reconstruction requirement: desired user signal should be 10 dB above noise floor

$\Rightarrow$ i.e. $P_s$~-100 dBm and minimum signal to interference ratio $\dfrac{P_i}{P_s} > 50$ dB

$$\frac{P_i + P_s}{P_Q} > 60 \text{ dB}.$$

Required signal plus interferer to ADC quantization noise ratio: Calculating the effective resolution using Lloyd Max quantizer expression, the effective resolution required, assuming linear ADC operation, is 12 bits and accounting non-linearities (~ 2 bits) leads us to ADC requirements of 14 bits to achieve desired SNR.

Let us now consider a universal mobile telecommunications system (UMTS) transmission technique for communication with a chip rate of 3.84 Msps. In this case, the ADC must be sampled at 7.68 Msps. State of art ADCs such as successive approximation pipelined and sigma delta ADCs can achieve an effective resolution greater than 14 bits.

Although the above describes the use of the leakage signal cancellation in embodiments in which transmission and reception occur in the same bandwidth, it should be appreciated that the interference suppression/cancellation method may be equally applicable to any scenario that need not have transmission and reception in the same bandwidth, but in which a large interference signal may be present. One embodiment in which the above signal cancellation method may be used, is in the presence of a jamming signal. If a jamming signal is received along with a desired received signal at the antenna, the analog canceller may suppress the jamming signal component to provide a modulated output signal comprising the desired signal component and a residual leakage signal component. The digital canceller may receive the modulated output signal, and may suppress the residual leakage component in the modulated output signal to produce the desired signal. In this embodiment, it is not necessary that the transmission and reception are occurring in the same bandwidth. Also, the analog and digital cancellers are cancelling the jamming signal rather than a leakage signal. The present inventions may be embodied in other specific apparatus and/or methods. The described embodiments are to be considered in all respects as only illustrative and not restrictive. In particular, the scope of the invention is indicated by the appended claims rather than by the description and figures herein.

## Claims

1. A receiver (200) for wireless communications in which transmission and reception occur in the same bandwidth, the receiver comprising:

an analogue leakage canceller (212) operable to receive an RF signal (*x(t)*) comprising a desired signal component and a leakage signal component, and to suppress the leakage signal component using a first leakage cancellation mechanism (222) to provide a modulated output signal (*z(t)*) comprising the desired signal component and a residual leakage signal component;
a digital leakage canceller (224) operable to receive the modulated output signal (*z(t)*), and to cancel the residual leakage component in the modulated output signal (*z(t)*) using a second leakage cancellation mechanism (224) to provide the desired signal;
a first high resolution analog-to-digital converter (218) operable to receive the modulated output signal (*z(t)*) from the analogue leakage canceller (212) and to convert the modulated output signal ($z(t)$) to a first digital signal and provide the first digital signal as input to the digital leakage canceller (224);

wherein the analogue leakage canceller (212) is a modulated wideband leakage canceller and the first leakage cancellation mechanism (222) is a modulated wideband leakage cancellation algorithm and wherein the receiver (200) further comprises:

a second low resolution analog-to-digital converter (214) operable to convert the modulated output signal ($z(t)$) from the modulated wideband leakage canceller (212) to a second digital signal and provide the second digital signal to the first leakage cancellation mechanism (222) for use in the modulated wideband leakage cancellation algorithm.

2. A receiver according to claim 1, wherein the modulated wideband leakage canceller (212) comprises multiple tunable mixers ($302_1$-$302_N$, $304_1$-$304_N$), wherein the wideband leakage cancellation algorithm (222) comprises estimating modulated wideband waveforms to approximate a phase shift for each of the tunable mixers ($302_1$-$302_N$, $304_1$-$304_N$).

3. A receiver according to claim 2, wherein the modulated wideband leakage canceller comprises a summation unit (306) operable to combine the outputs of the tunable mixers ($302_1$-$302_N$, $304_1$-$304_N$) to provide the modulated output signal ($z(t)$).

4. A receiver according to any preceding claim, wherein the digital leakage canceller (224) is operable to estimate a channel matrix between the transmission path and reception path in the receiver(200), the channel matrix representing the residual leakage in the digital signal.

5. A receiver according to claim 4, wherein the digital leakage canceller (224) is operable to estimate the channel matrix based on an impulse response of the channel using a training interval and a pilot sequence, wherein the channel matrix represents the channel from the transmit path to said digital leakage canceller (224).

6. A receiver according to claim 4 or 5, wherein the digital leakage canceller (224) is operable to re-construct the residual leakage signal based on the estimated channel matrix, and provide the desired signal by subtracting a re-constructed residual leakage signal from the digital signal.

7. A receiver according to any preceding claim, wherein the RF signal ($x(t)$) further comprises an interference component from nearby radios and/or a noise component and the digital leakage canceller is operable to provide the desired signal by subtracting the interference component and/or noise component from the digital signal.

8. A receiver according to any preceding claim, wherein the RF signal ($x(t)$) further comprises a jamming signal component and the analogue leakage canceller (212) is operable to suppress the jamming signal component.

9. A receiver according to any preceding claim, further comprising:

an antenna (232) operable to transmit and receive RF signals ($x(t)$); and
a circulator (228) operable to provide RF signals for transmission to the antenna (232) on a transmission path (Tx), and operable to provide RF signals ($x(t)$) received by the antenna (232) to the analogue leakage canceller on a reception path (Rx).

10. A method of leakage signal cancellation in wireless communications, the method comprising:

receiving an RF signal ($x(t)$) comprising a desired signal component and leakage signal component at an analogue leakage canceller (212);
suppressing the leakage signal component using an analogue leakage cancellation mechanism (222) to provide a modulated output signal ($z(t)$) comprising the desired signal component and a residual leakage signal component;
receiving the modulated output signal ($z(t)$) at a first high resolution analog-to-digital converter (218) and converting the modulated output signal ($z(t)$) to a first digital signal; and
suppressing the residual leakage component in the digital signal using a digital leakage cancellation mechanism (226) to provide the desired signal component;
wherein the analogue leakage canceller (212) is a modulated wideband leakage canceller and the first leakage cancellation mechanism (222) is a modulated wideband leakage cancellation algorithm;
converting the modulated output signal ($z(t)$) from the modulated wideband leakage canceller (212) to a second digital signal at a second low resolution analog-to-digital converter (214); and
providing the second digital signal to the first leakage cancellation mechanism (222) for use in the modulated wideband leakage cancellation algorithm.

**11.** A computer program product operable when executed on a computer to perform the method of claim 10.

**Patentansprüche**

**1.** Empfänger (200) für drahtlose Kommunikationen, in denen Übertragung und Empfang in derselben Bandbreite stattfinden, wobei der Empfänger umfasst:

einen analogen Leckage-Unterdrücker (212), der betreibbar ist zum Empfangen eines RF-Signals (x(t), umfassend eine gewünschte Signalkomponente und eine Leckagesignalkomponente, und zum Unterdrücken der Leckagesignalkomponente unter Verwenden eines ersten Leckage-Unterdrückungsmechanismus (222) zum Bereitstellen eines modulierten Ausgangssignals (z(t)), umfassend die gewünschte Signalkomponente und eine restliche Leckage-Signalkomponente;
einen digitalen Leckage-Unterdrücker (224), der betreibbar ist zum Empfangen des modulierten Ausgangssignals (z(t)) und zum Unterdrücken der restlichen Leckagekomponente in dem modulierten Ausgangssignal (z(t)) unter Verwenden eines zweiten Leckage-Unterdrückungsmechanismus (224) zum Bereitstellen des gewünschten Signals;
einen ersten hochauflösenden Analog-zu-Digital-Wandler (218), der betreibbar ist zum Empfangen des modulierten Ausgangssignals (z(t)) von dem analogen Leckage-Unterdrücker (212) und zum Umwandeln des modulierten Ausgangssignals (z(t)) in ein erstes Digitalsignal und zum Bereitstellen des ersten Digitalsignals als Eingang in den digitalen Leckage-Unterdrücker (224);
wobei der analoge Leckage-Unterdrücker (212) ein modulierter Breitband-Leckage-Unterdücker ist und der erste Leckage-Unterdrückungsmechanismus (222) ein modulierter Breitband-Leckage-Unterdrückungsalgorithmus ist und wobei der Empfänger (200) weiterhin umfasst:
einen zweiten niedrigauflösenden Analog-zu-Digital-Wandler (214), der betreibbar ist zumUmwandeln des modulierten Ausgangssignals (z(t)) von dem modulierten Breitband-Leckage-Unterdrücker (212) in ein zweites Digitalsignal und zum Bereitstellen des zweiten Digitalsignals für den ersten Leckage-Unterdrückungsmechanismus (222) zum Verwenden in dem modulierten Breitband-Leckage-Unterdrückungsalgorithmus.

**2.** Empfänger nach Anspruch 1, wobei der modulierte Breitband-Leckage-Unterdrücker (212) mehrere abstimmbare Mischer ($302_1$-$302_N$, $304_1$-$304_N$) umfasst, wobei der Breitband-Leckage-Unterdrückungsalgorithmus (222) umfasst das Abschätzen modulierter Breitband-Wellenformen zum Annähern einer Phasenverschiebung für jeden der abstimmbaren Mischer ($302_1$-$302_N$, $304_1$-$304_N$).

**3.** Empfänger nach Anspruch 2, wobei der modulierte Breitband-Leckage-Unterdrücker eine Summationseinheit (306) umfasst, die betreibbar ist zum Kombinieren der Ausgänge der abstimmbaren Mischer ($302_1$-$302_N$, $304_1$-$304_N$) zum Bereitstellen des modulierten Ausgangssignals (z(t)).

**4.** Empfänger nach einem beliebigen der vorhergehenden Ansprüche, wobei der digitale Leckage-Unterdrücker (224) betreibbar ist zum Abschätzen einer Kanalmatrix zwischen dem Übertragungspfad und dem Empfangspfad in dem Empfänger (200), wobei die Kanalmatrix die restliche Leckage im Digitalsignal repräsentiert.

**5.** Empfänger nach Anspruch 4, wobei der digitale Leckage-Unterdrücker (224) betreibbar ist zum Abschätzen der Kanalmatrix auf Grundlage einer Impulsantwort des Kanals unter Benutzen eines Trainingsintervalls und einer Pilotsequenz, wobei die Kanalmatrix den Kanal vom Übertragungspfad zu besagtem digitalen Leckage-Unterdrücker (224) repräsentiert.

**6.** Empfänger nach Anspruch 4 oder 5, wobei der digitale Leckage-Unterdrücker (224) betreibbar ist zum Rekonstruieren des restlichen Leckagesgnals auf Grundlage der abgeschätzten Kanalmatrix und zum Bereitstellen des gewünschten Signals durch Abziehen eines rekonstruierten restlichen Leckagesignals vom Digitalsignal.

**7.** Empfänger nach einem beliebigen der vorhergehenden Ansprüche, wobei das RF-Signal (x(t)) weiterhin umfasst eine Interferenzkomponente von Radios in der Nähe und/oder eine Rauschkomponente und wobei der digitale Leckage-Unterdrücker betreibbar ist zum Bereitstellen des gewünschten Signals durch Abziehen der Interferenzkomponente und/oder Rauschkomponente vom Digitalsignal.

8. Empfänger nach einem beliebigen der vorhergehenden Ansprüche, wobei das RF-Signal (x(t)) weiterhin eine Stausignalkomponente umfasst und der analoge Leckageunterdrücker (212) betreibbar ist zum Unterdrücken der Stausignalkomponente.

9. Empfänger nach einem beliebigen der vorhergehenden Ansprüche, weiterhin umfassend:

   eine Antenne (232), die betreibbar ist zum Übertragen und Empfangen von RF-Signalen (x(t)); und
   einen Zirkulator (228), der betreibbar ist zum Bereitstellen von RF-Signalen für die Übertragung auf die Antenne (232) auf einem Übertragungspfad (Tx) und betreibbar ist zum Bereitstellen von RF-Signalen (x(t)), die von der Antenne (232) empfangen wurden, für den analogen Leckage-Unterdrücker auf einem Empfangspfad (Rx).

10. Verfahren für die Leckage-Signalunterdrückung in drahtlosen Kommunikationen, wobei das Verfahren umfasst:

   Empfangen eines RF-Signals (x(t)), umfassend eine gewünschte Signalkomponente und eine Leckagesignalkomponente an einem analogen Leckage-Unterdrücker (212);
   Unterdrücken der Leckagesignalkomponente unter Verwenden eines analogen Leckage-Unterdrückungsmechanismus (222) zum Bereitstellen eines modulierten Ausgangssignals (z(t)), umfassend die gewünschte Signalkomponente und eine restliche Leckagesignalkomponente;
   Empfangen des modulierten Ausgangssignals (z(t)) an einem ersten hochauflösenden Analog-zu-Digital-Wandler (218) und Umwandeln des modulierten Ausgangssignals (z(t)) in ein erstes Digitalsignal; und
   Unterdrücken der restlichen Leckagekomponente in dem Digitalsignal unter Verwenden eines digitalen Leckage-Unterdrückungsmechanismus (226) zum Bereitstellen der gewünschten Signalkomponente;
   wobei der analoge Leckage-Unterdrücker (212) ein modulierter Breitband-Leckage-Unterdücker ist und der erste Leckage-Unterdrückungsmechanismus (222) ein modulierter Breitband-Leckage-Unterdrückungsalgorithmus ist;
   Umwandeln des modulierten Ausgangssignals (z(t)) aus dem modulierten Breitband-Leckage-Unterdrücker (212) in ein zweites Digitalsignal an einem zweiten niedrigauflösenden Analog-zu-Digital-Wandler (214); und
   Bereitstellen des zweiten Digitalsignals für den ersten Leckage-Unterdrückungsmechanismus (222) zum Gebrauch in dem modulierten Breitband-Leckage-Unterdrückungsalgorithmus.

11. Computerprogramm-Produkt, das betreibbar ist, wenn es auf einem Computer ausgeführt wird, zum Durchführen des Verfahrens nach Anspruch 10.

**Revendications**

1. Récepteur (200) destiné à des communications sans fil dans lesquelles l'émission et la réception s'effectuent dans la même bande passante, le récepteur comprenant :

   un dispositif d'annulation de fuite analogique (212) permettant de recevoir un signal RF (*x(t)*) comprenant une composante de signal souhaitée et une composante de signal de fuite, et d'éliminer la composante de signal de fuite à l'aide d'un premier mécanisme d'annulation de fuite (222) afin de délivrer un signal de sortie modulé (*z(t)*) comprenant la composante de signal souhaitée et une composante de signal de fuite résiduelle ;
   un dispositif d'annulation de fuite numérique (224) permettant de recevoir le signal de sortie modulé (*z(t)*), et d'éliminer la composante de fuite résiduelle dans le signal de sortie modulé (*z(t)*) à l'aide d'un deuxième mécanisme d'annulation de fuite (224) afin de délivrer le signal souhaité ;
   un premier convertisseur analogique-numérique à haute résolution (218) permettant de recevoir le signal de sortie modulé (*z(t)*) en provenance du dispositif d'annulation de fuite analogique (212) et de convertir le signal de sortie modulé *(z(t))* en un premier signal numérique et de délivrer le premier signal numérique en tant qu'entrée du dispositif d'annulation de fuite numérique (224) ;
   dans lequel le dispositif d'annulation de fuite analogique (212) est un dispositif d'annulation de fuite à large bande modulé et le premier mécanisme d'annulation de fuite (222) est un algorithme d'annulation de fuite à large bande modulé et dans lequel le récepteur (200) comprend en outre :
   un deuxième convertisseur analogique-numérique à basse résolution (214) permettant de convertir le signal de sortie modulé (*z(t)*) en provenance du dispositif d'annulation de fuite à large bande modulé (212) en un deuxième signal numérique et de délivrer le deuxième signal numérique au premier mécanisme d'annulation de fuite (222) pour une utilisation dans l'algorithme d'annulation de fuite à large bande modulé.

2. Récepteur selon la revendication 1, dans lequel le dispositif d'annulation de fuite à large bande modulé (212) comprend de multiples mélangeurs accordables ($302_1$-$302_N$, $304_1$-$304_N$), dans lequel l'algorithme d'annulation de fuite à large bande (222) comprend l'estimation de formes d'onde à large bande modulées pour approximer un déphasage pour chacun des mélangeurs accordables ($302_1$-$302_N$, $304_1$-$304_N$).

3. Récepteur selon la revendication 2, dans lequel le dispositif d'annulation de fuite à large bande modulé comprend un module sommateur (306) permettant de combiner les sorties des mélangeurs accordables $302_1$-$302_N$, $304_1$-$304_N$ afin de délivrer le signal de sortie modulé ($z(t)$).

4. Récepteur selon l'une quelconque des revendications précédentes, dans lequel le dispositif d'annulation de fuite numérique (224) permet d'estimer une matrice de canal entre le chemin de transmission et le chemin de réception dans le récepteur (200), la matrice de canal représentant la fuite résiduelle dans le signal numérique.

5. Récepteur selon la revendication 4, dans lequel le dispositif d'annulation de fuite numérique (224) permet d'estimer la matrice de canal d'après une réponse impulsionnelle du canal en utilisant un intervalle d'apprentissage et une séquence pilote, dans lequel la matrice de canal représente le canal depuis le chemin de transmission vers ledit dispositif d'annulation de fuite numérique (224).

6. Récepteur selon la revendication 4 ou 5, dans lequel le dispositif d'annulation de fuite numérique (224) permet de reconstruire le signal de fuite résiduel d'après la matrice de canal estimée, et de délivrer le signal souhaité en soustrayant un signal de fuite résiduel reconstruit du signal numérique.

7. Récepteur selon l'une quelconque des revendications précédentes, dans lequel le signal RF ($x(t)$) comprend en outre une composante d'interférence provenant des radios voisines et/ou une composante de bruit et le dispositif d'annulation de fuite numérique permet de délivrer le signal souhaité en soustrayant la composante d'interférence et/ou la composante de bruit du signal numérique.

8. Récepteur selon l'une quelconque des revendications précédentes, dans lequel le signal RF ($x(t)$) comprend en outre une composante de signal de brouillage et le dispositif d'annulation de fuite analogique (212) permet d'éliminer la composante de signal de brouillage.

9. Récepteur selon l'une quelconque des revendications précédentes, comprenant en outre :

une antenne (232) permettant d'émettre et de recevoir des signaux RF ($x(t)$) ; et
un circulateur (228) permettant de délivrer des signaux RF pour transmission à l'antenne (232) sur un chemin de transmission (Tx), et permettant de délivrer des signaux RF ($x(t)$) reçus par l'antenne (232) au dispositif d'annulation de fuite analogique sur un chemin de réception (Rx).

10. Procédé d'annulation de signal de fuite dans des communications sans fil, comprenant les étapes suivantes :

recevoir un signal RF ($x(t)$) comprenant une composante de signal souhaitée et une composante de signal de fuite au niveau d'un dispositif d'annulation de fuite analogique (212) ;
éliminer la composante de signal de fuite à l'aide d'un mécanisme d'annulation de fuite analogique (222) afin de délivrer un signal de sortie modulé ($z(t)$) comprenant la composante de signal souhaitée et une composante de signal de fuite résiduelle ;
recevoir le signal de sortie modulé ($z(t)$) au niveau d'un premier convertisseur analogique-numérique à haute résolution (218) et convertir le signal de sortie modulé ($z(t)$) en un premier signal numérique ; et
éliminer la composante de fuite résiduelle dans le signal numérique à l'aide d'un mécanisme d'annulation de fuite numérique (226) afin de délivrer la composante de signal souhaitée ;
dans lequel le dispositif d'annulation de fuite analogique (212) est un dispositif d'annulation de fuite à large bande modulé et le premier mécanisme d'annulation de fuite (222) est un algorithme d'annulation de fuite à large bande modulé ;
convertir le signal de sortie modulé ($z(t)$) en provenance du dispositif d'annulation de fuite à large bande modulé (212) en un deuxième signal numérique au niveau d'un deuxième convertisseur analogique-numérique à basse résolution (214) ; et
délivrer le deuxième signal numérique au premier mécanisme d'annulation de fuite (222) pour une utilisation dans l'algorithme d'annulation de fuite à large bande modulé.

11. Produit-programme informatique permettant lorsqu'il est exécuté sur un ordinateur de mettre en oeuvre le procédé selon la revendication 10.

RX-signal

120

Leakage by
input return
loss from
antenna

118

100

RX-signal

116

112

ADC 114

Leakage
by finite
circulator
isolation

110

TX

Leakage
by direct
coupling
(PCB, surface
waves)

108

106

104

DAC 102

FIG. 1

FIG. 2

EP 2 814 184 B1

FIG. 3

FIG. 4

Power level

TX: 20dBm

25dB suppression (circulator)

TX-leakage after
circulator: -5dBm

58dB suppression (MWIC)
ADC (1) dynamic range

Leakage after
MWIC: -63dBm

41dB suppression (DIC)
ADC (2) dynamic range

-104dBm (10dB SNR)

Residual leakage after
DIC: -104dBm (approx.)
similar to noise power

frequency

Signal-contributions

Thermal-Noise: -114dBm / MHz

FIG. 5

**EP 2 814 184 B1**

## REFERENCES CITED IN THE DESCRIPTION

**Patent documents cited in the description**

- EP 1841084 A